# EUROPÄISCHE PATENTSCHRIFT

(11) **EP 1 671 876 B1**
(45) Veröffentlichungstag und Bekanntmachung des Hinweises auf die Patenterteilung: **30.07.2008**
(21) Anmeldenummer: 05024093.6
(22) Anmeldetag: 04.11.2005
(51) Int. Cl.: B62D 65/06

(54) **Verfahren und Vorrichtung zur Überprüfung von Spaltmassen zwischen der Rohkarosserie eines Fahrzeugs und Türen oder Klappen, die an der Karosserie angeschlagen sind**
Method and device to check the gap between a vehicle body and doors or lids attached thereto
Procédé et dispositif pour le contrôle du jeu entre la carrosserie d'un véhicule et les portes ou les ouvrants sur le véhicule

(30) Priorität: 16.12.2004 DE 102004060655; 25.01.2005 DE 102005003467
(43) Veröffentlichungstag der Anmeldung: 21.06.2006
(73) Patentinhaber: MT Misslbeck Technologies GmbH, 85055 Ingolstadt (DE)
(72) Erfinder: Nunner, Frank, 85072 Eichstätt (DE); Hirsch, Stephan, 84030 Ergolding (DE)
(74) Vertreter: Kruspig, Volkmar

(56) Entgegenhaltungen:
- DE-A1- 10 103 558
- DE-A1-7102004 007 13
- US-A1- 2002 052 710

## Beschreibung

Die Erfindung betrifft ein Verfahren und eine Vorrichtung zur Überprüfung von Spaltmaßen zwischen der Rohkarosserie eines Fahrzeugs und Türen oder Klappen, die an der Karosserie angeschlagen sind, insbesondere im Bereich von einzubringenden umlaufenden Profildichtungen mittels elektronisch auswertbaren Tastelementen, gemäß Oberbegriff des Patentanspruchs 1 bzw. 7.

Zwischen den Türen und der Seitenwand von Kraftfahrzeugen befinden sich im Regelfall umlaufende Gummidichtungen, die bei geschlossener Fahrzeugtür bzw. bei geschlossener Heckklappe komprimiert werden. Für eine gleichmäßige Abdichtung ist somit der Spalt zwischen dem Türblech und der Karosserieseitenwand wesentlich.

Mit heutiger Technologie können Blechformteile wirtschaftlich nur mit einer Genauigkeit von im Wesentlichen ± 2,5 mm gefertigt werden. Unter Beachtung ungünstiger Konstellationen durch Addition von Toleranzen kann dies dazu führen, daß bei einem späteren Betrieb eines Kraftfahrzeugs die notwendige Dichtigkeit nicht mehr gewährleistet ist.

Um bei der Serienfertigung von Kraftfahrzeugen bereits frühzeitig Problemstellen erkennen zu können, werden je nach Losgröße Rohkarossen, d.h. Karosserien ohne Farbbeschichtung, Schlösser, Scheiben und sonstigen Einbauteilen, ausgeschleust und bezogen auf die vorerwähnten Maßhaltigkeiten vermessen.

Ein firmeninterner Stand der Technik bestand darin, an definierten Prüfstellen auf einer Meßmaschine verformbare Kügelchen aus einer Kunststoff- oder Kautschukmasse anzubringen. Im Anschluß wurden dann die Türen geschlossen, geöffnet und die Dicke der Abdrücke in den verformten Kugelkörpern mit Hilfe eines Meßschiebers oder dergleichen Meßeinrichtung bestimmt.

Eine derartige Vermessung ist nicht nur sehr zeit- und kostenaufwendig, sondern auch mit nicht unerheblichen Meßfehlern behaftet.

Aus der DE 101 03 558 A1 ist ein Verfahren und eine Einrichtung zur Vermessung von Schacht- und Spaltmaßen vorbekannt, und zwar insbesondere zu deren Anwendung im Karosseriebau bei Kraftfahrzeugen.

Die dortige Meßmethodik beruht darauf, daß in den zu vermessenden Schacht oder Spalt ein Füllkörper eingebracht wird, der an eine Ultraschallprüfeinheit gekoppelt ist. Bei einer Ausführungsform ist der Füllkörper ein Dichtelement in Form eines Keders, wobei eine Ultraschallsonde als Ultraschallprüfeinrichtung in die bereits eingelegte Dichtung eingebracht wird. Grundsätzlich umhüllt der Füllkörper die Ultraschallsonde der Ultraschallprüfeinrichtung, d.h. die Sonde ist mit dem Füllkörper umgeben, der dann in das Profil des zu vermessenden Schachts oder Spalts eingebracht wird.

Aus dem Vorgenannten ist es daher Aufgabe der Erfindung, ein weiterentwickeltes Verfahren und eine Vorrichtung zur Überprüfung von insbesondere verdeckten Spaltmaßen zwischen der Rohkarosserie eines Fahrzeugs und Türen oder Klappen, die an der Karosserie angeschlagen sind, insbesondere im Bereich von einzubringenden umlaufenden Profildichtungen, anzugeben, wobei die Möglichkeit bestehen soll, die Messungen mit hoher Genauigkeit und Reproduzierbarkeit durchzuführen, ohne daß unvertretbar hohe Kosten für eine derartige Überprüfung und Vermessung anfallen.

Die Lösung der Aufgabe der Erfindung erfolgt mit einem Verfahren gemäß Definition nach Patentanspruch 1 sowie mit einer Vorrichtung gemäß Merkmalskombination nach Patentanspruch 7, wobei die Unteransprüche mindestens zweckmäßige Ausgestaltungen und Weiterbildungen darstellen.

Gemäß dem verfahrensseitigen Grundgedanken der Erfindung wird in den offenen und zugänglichen Wandbereich der Rohkarosserie an den zu überprüfenden Stellen, z.B. im Bereich der Vorder- und/oder Hintertüren oder einer Heckklappe, ein rahmenartiges Gestell eingesetzt, wobei das Gestell an vorgegebenen Meßpunkten Aussparungen aufweist.

In die Meßpunkt-Aussparungen werden dann elektronisch auswertbare Tastelemente eingesetzt, welche beispielsweise als induktive Geber ausgebildet sein können.

Nachdem die einzelnen Tastelemente eingesetzt wurden, wird die jeweilige Tür oder Klappe in ihre Schließposition überführt, in dieser Position gehalten und es erfolgt in der Schließposition das elektronische Ansteuern und Auswerten der von den Tastelementen gelieferten Signale, so daß letztendlich softwareunterstützt ein komplettes Spaltmeßwertergebnis vorliegt.

Bei einer Ausgestaltung können die Tastelemente magnetisch an der Rohkarosserie fixiert werden. Ebenso besteht die Möglichkeit, die Tastelemente kraftschlüssig, z.B. durch Klemmung, an entsprechenden Vorsprüngen der Rohkarosserie zu fixieren. Alternativ können die Tastelemente auch am Gestell befestigt werden bzw. dort verbleiben.

Die Schließposition der Türen oder Klappen wird zum Zweck der Spaltmessung z.B. magnetisch gehalten.

Der oder die rahmenartigen Gestelle verbleiben während der Messung am eingesetzten Ort, so daß auch hierdurch eine besonders rationelle Vermessung möglich wird.

Um wenige Standard-Tastelemente verwenden zu können sowie zur Sicherstellung der zu überstreichenden Meßbereiche unter Beachtung denkbarer Toleranzen werden an die jeweiligen Kfz-typischen geometrischen Verhältnisse angepaßte Tastelement-Aufnahmekörper eingesetzt, welche auch ein Betätigungs- oder Hebelelement zum leichteren Setzen oder Entfernen dieser umfassen.

Bei der Vorrichtung zur Überprüfung von Spaltmaßen zwischen der Rohkarosserie eines Fahrzeugs und Türen oder Klappen, die an der Karosserie angeschlagen sind, umfaßt diese ein rahmenartiges Gestell zur Verwendung als Setzschablone für die Tastelemente, wobei das Gestell an vorbestimmten Meßpunkten Aussparungen für die Tastelemente bzw. die Tastelement-Aufnahmekörper besitzt.

Die Tastelemente werden vom vorerwähnten zugehörigen Aufnahmekörper getragen, wobei der jeweilige Aufnahmekörper eine nutförmige Öffnung für das Tastelement sowie einen Handhabungs- und Betätigungsfortsatz aufweist.

Das rahmenartige Gestell kann bevorzugt aus einem kohlefaserverstärkten Material, nämlich Karbon bestehen.

In den Aufnahmekörpern ist mindestens ein Magnetelement eingesetzt, welches zum leichten Fixieren der einzelnen Körper an der jeweiligen Stelle der Rohkarosserie dient.

Der Aufnahmekörper kann ausgestaltend einen Klemmschlitz mit Klemmschraube aufweisen. Ebenso besteht die Möglichkeit, Aufnahmekörper als Winkeladapter auszuführen, um auch entsprechende Tastelemente unter komplizierten geometrischen Verhältnissen anordnen zu können.

Die Öffnung im Aufnahmekörper kann eine Kreisform aufweisen, wobei in diese kreisförmige Öffnung eine magnetisch fixierte Drehscheibe einsetzbar ist, welche wiederum eine Nut für das Tastelement umfaßt. Hierdurch kann eine exakte Positionierung unter den jeweiligen gegebenen räumlichen Verhältnissen vorgenommen werden.

Zur Höhenanpassung ist die vorerwähnte Drehscheibe auswechselbar und weist eine unterschiedliche Dicke auf.

Die kreisförmige Öffnung weist den Schwenkbereich der Drehscheibe mit eingesetztem Tastelement begrenzende Anschlagflächen oder Anschlagkanten auf.

Zusammenfassend gelingt es mit der Erfindung, in sehr effektiver Weise Spaltmaße zwischen Türen und Heckklappen von Fahrzeugen an Rohkarosserien zu überprüfen, so daß später montierte primäre und sekundäre Gummidichtelemente die notwendige Vorspannung aufweisen und unter allen Betriebsumständen die notwendige Dichtigkeit gegeben ist. Durch das rahmenartige Gestell aus einer karbonfaserverstärkten Materialkombination ist das Setzen von elektronisch auswertbaren Tastelementen in sehr exakter und reproduzierbarer Weise und mit geringem Zeitaufwand möglich. Bevorzugt werden als Haftmagneten Neodymmagneten verwendet, die bei einer kleinen Kontaktfläche zu entsprechend hohen und ausreichenden Haftkräften führen.

Um nach Möglichkeit mit ganz wenigen Standard-Tastelementen arbeiten zu können, werden die vorstehend erläuterten Aufnahmekörper, die eine Schuhform besitzen können, eingesetzt. Mit Hilfe der Formgebung unter Anwendung eines Betätigungsfortsatzes an den Aufnahmekörpern können diese trotz der hohen Magnetkräfte leicht gelöst und damit der Taster ohne Beschädigung desselben entfernt werden.

Die Erfindung soll nachstehend anhand eines Ausführungsbeispiels sowie unter Zuhilfenahme von Figuren näher erläutert werden.

Hierbei zeigen:
- Fig. 1: ein Detail einer Rohkarosserie mit definierten zu vermessenden Stellen bezüglich der Spaltmaße bei eingesetzten Türen;
- Fig. 2: eine Detaildarstellung der Anordnung von Tastelementen mit Aufnahmekörpern bei einer Vermessung der Position Seitenwandflansch der Rohkarosserie und zugehöriger Tür;
- Fig. 3: eine analoge Darstellung gemäß Fig. 2, jedoch mit der Situation Heckklappe und Seitenwand, wobei das Tastelement am hervorstehenden Blechflansch durch Klemmung befestigt wird;
- Fig. 4: Beispiele von rahmenartigen Gestellen aus Karbonmaterial mit Aussparungen zur Aufnahme der Aufnahmekörper bzw. der Tastelemente;
- Fig. 5: verschiedene Darstellungen von Aufnahmekörpern mit darin befindlichem Tastelement;
- Fig. 6: weitere Darstellungen von Aufnahmekörpern zur klemmenden Befestigung mit aufgenommenem Tastelement und
- Fig. 7: ein rahmenartiges Gestell zur Bestimmung der Befestigungsstellen für die Aufnahmekörper im Bereich der Überprüfung von Spaltmaßen an der Heckklappe.

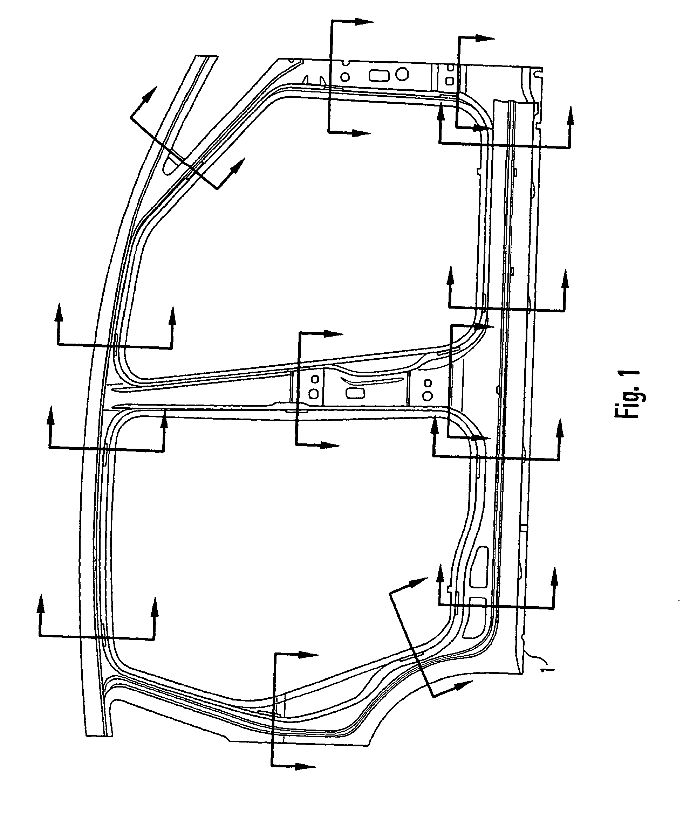

Die in der Fig. 1 gezeigte Rohkarosserie 1 weist im Bereich zwischen A-, Bund C-Säule verschiedene kritische Punkte (durch Pfeildarstellungen gekennzeichnet) auf, an denen es gilt, Spaltmaße bei eingesetzten Türen zu überprüfen, um zu bestimmen, ob bei einer späteren Komplettierung mit Dichtelementen diese eine exakte Position und Vorspannung erhalten, so daß die Dichtigkeit beim Betrieb des Kraftfahrzeugs gewährleistet ist. Die entsprechenden Messungen werden bereits an der Rohkarosserie durchgeführt, um Fehlerquellen aufzudecken und, wenn vorhanden, diese mit möglichst geringen Kosten und Aufwand zu beseitigen.

Zur Vermessung kommen elektronisch auswertbare Tastelemente 2 mit beweglicher Tastspitze 3 zum Einsatz. Die Standard-Tastelemente 2 werden von speziellen Aufnahmekörpern 4 getragen.

Die Aufnahmekörper 4 weisen einen Rücksprung 5 zum leichteren Entfernen und zur verbesserten Handhabung auf, wobei der Rücksprung 5 bei bestimmten Ausführungsformen in einen Betätigungsfortsatz 6 übergeht.

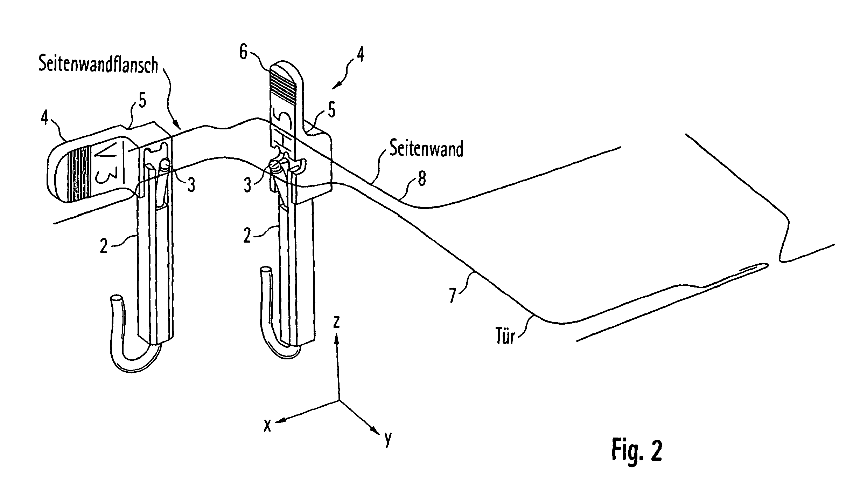

Bei der Darstellung nach Fig. 2 sind die dort beispielhaft gezeigten Tastelemente 2 mit Aufnahmekörper 4 so angeordnet, daß das Spaltmaß zwischen einer angedeuteten Tür 7 und der Karosserieseitenwand 8 bestimmt werden kann.

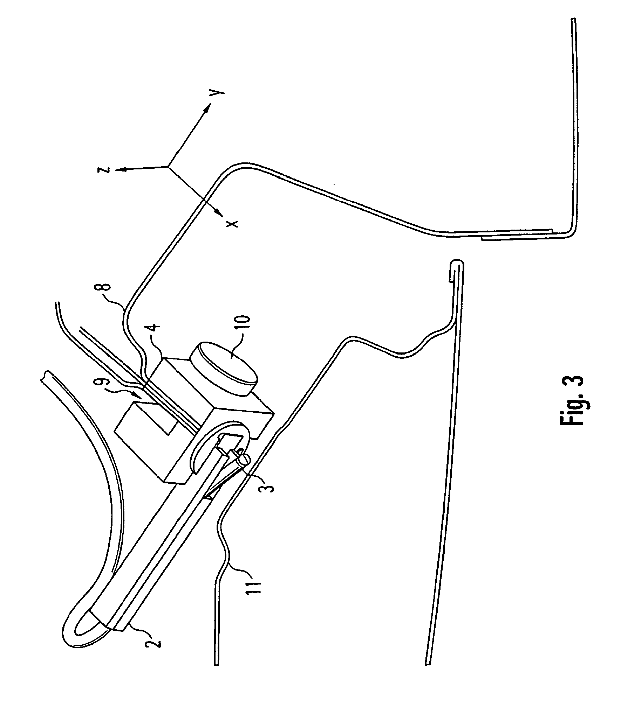

Die Darstellung nach Fig. 3 zeigt wiederum ein Tastelement 2 mit Tastspitze 3. Der Aufnahmekörper 4 besitzt hier einen Schlitz 9 sowie eine Klemmschraube 10.

Mit Hilfe des Schlitzes 9 und der Klemmschraube 10 kann der Aufnahmekörper 4 an einem hervorstehenden Blechflansch der Karosserieseitenwand 8 befestigt werden, so daß das gegebene Spaltmaß zur angedeuteten Heckklappe 11 bestimmbar ist.

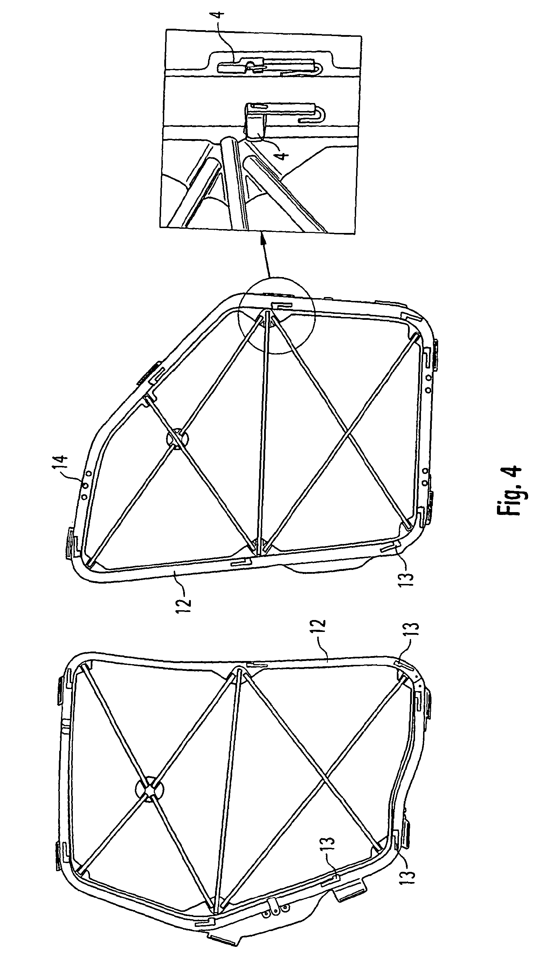

Fig. 4 zeigt zwei rahmenartige Gestelle 12 aus einem Karbonmaterial mit entsprechenden Karbonrohrverstärkungen. Die für die Vorder- und Hintertür gefertigten Gestelle 12 besitzen an vorgegebenen Meßpunkten Aussparungen 13, die die Lage der Aufnahmekörper 4 mit Tastelementen 2 definieren. In der Detaildarstellung im rechten Bildteil ist dann erkennbar, wie die einzelnen Tastelemente 2 mit ihren zugehörigen jeweils ausgewählten speziellen Aufnahmekörpern 4 in die entsprechenden Ausnehmungen 13 eingesetzt werden. Bevorzugt ist zum Befestigen der Aufnahmekörper dort, wo keine Klemmung erfolgt, ein Magnet vorgesehen.

Da noch keine Schlösser vorhanden sind, werden an den Übergängen der Türaußenhaut an definierten Stellen Magnete gesetzt, die die Türschließposition halten. Am Rahmen sind darüber hinaus Haftmagnete 14 als Abstandshalter zur Seitenwand vorgesehen.

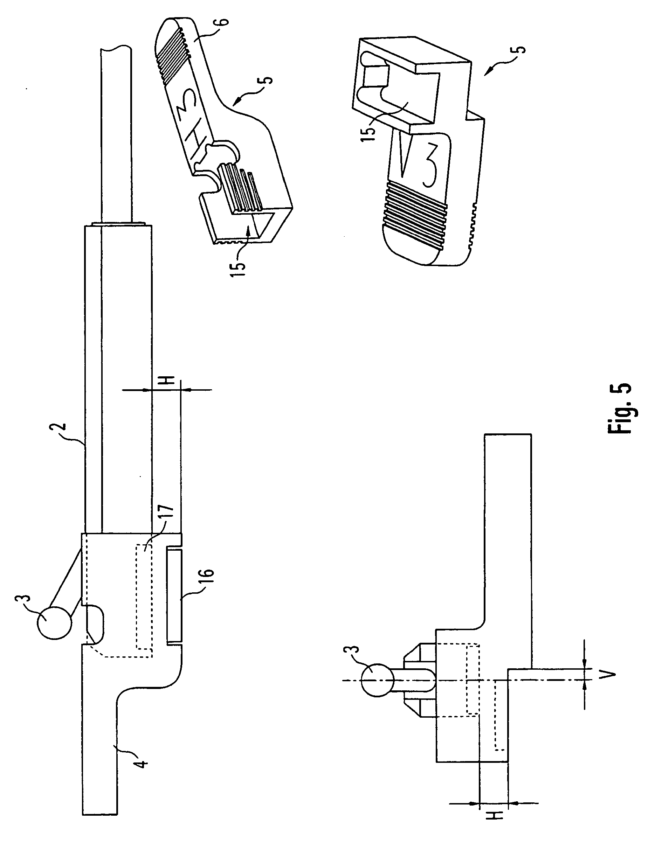

Fig. 5 zeigt Details der unterschiedlichen Aufnahmekörper 4 mit bereits darin befindlichem, magnetisch fixierten Tastelement 2 und Tastspitze 3. Die Aufnahmekörper 4 weisen zum Halten der entsprechenden Enden des jeweiligen Tastelements 2 eine Nut 15 auf, die bezogen auf die Längsachse des jeweiligen Aufnahmekörpers auch unter einem z.B. 90°-Winkel stehen kann.

Der Betätigungsfortsatz 6 bzw. der Rücksprung 5 ermöglicht ein sehr leichtes Entfernen der magnetisch sehr fest haftenden Aufnahmekörper 4. Zum Befestigen der Aufnahmekörper 4 ist, wie vorerwähnt, ein magnetisches Fixieren mit Hilfe eines eingesetzten Magneten 16 besonders zweckmäßig.

Auch die Tastelemente 2 werden in der Nut 15 zusätzlich durch einen Magneten 17 gehalten.

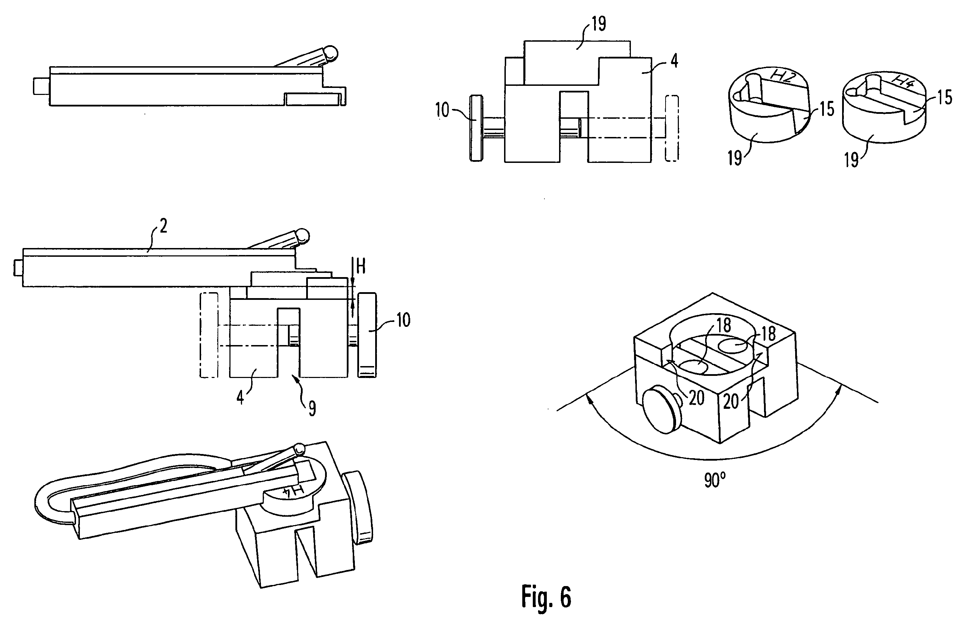

Bei der Ausführungsvariante der Taster und Aufnahmekörper nach Fig. 6 dienen letztere der klemmenden Befestigung z.B. an hervorstehenden Falzen oder Kanten der Rohkarosserie.

Wie bereits in der Fig. 3 gezeigt, umfaßt hier der Aufnahmekörper 4 einen Block mit Schlitz 9, in den das Ende einer Klemmschraube 10 hineinragt.

Im oberen Teil weist dieser Aufnahmekörper 4 eine kreisscheiben- oder kreisringförmige Ausnehmung auf, in denen im Bodenbereich Befestigungsmagnete 18 befindlich sind.

Um eine große Einsatzvariabilität dieses Aufnahmekörpers 4 zu erreichen, wird in die kreisförmige Ausnehmung eine drehbare Scheibe 19 eingesetzt, die jeweils wiederum eine Nut 15 zur Aufnahme des betreffenden Endes des Tastelements 2 besitzt.

Im Schwenkbereich der drehbaren Scheibe 15 mit darin eingesetztem Tastelement 2 sind am Aufnahmekörper 4 die Drehbewegungen des Tastelements begrenzende Anschlagflächen 20 vorgesehen. Der Schwenkbereich ist, wie in der Figur gezeigt, beispielsweise mit 90° vorgegeben.

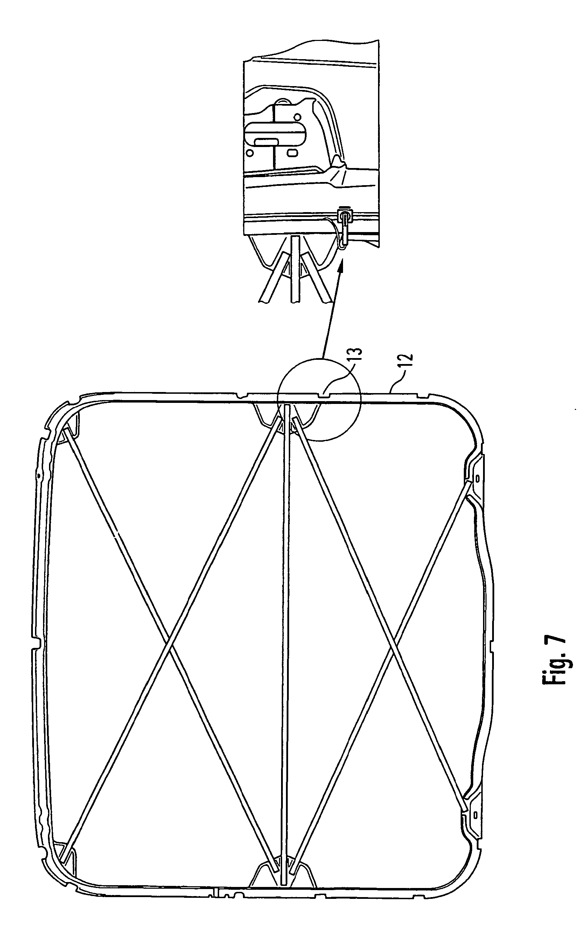

Ein rahmenartiges Gestell aus kohlefaserverstärktem Material für Untersuchungen im Heckklappenbereich zeigt die Fig. 7. Die Detaildarstellung im rechten Bildteil zeigt ein beispielhaft eingesetztes Tastelement im vorgegebenen Aussparungsbereich 13.

Das rahmenartige Gestell 12 verbleibt auch bei der Messung im Heckklappenbereich im entsprechenden Zwischenraum.

Für die Messungen an der Heckklappe ist der Tasterfuß, d.h. der Aufnahmekörper 4, wie bereits erläutert, als Klemme ausgeführt, da hier die Befestigung an einem umlaufenden Blechflansch notwendig ist. Eine Anpassung an das jeweilige Spaltmaß erfolgt durch die unterschiedlichen Höhen, z.B. H2 oder H₄ der einsetzbaren drehbaren Scheibe 19, die, wie bereits erwähnt, auch eine Drehung oder ein Verschwenken des Tastelements 2 um z.B. 90° ermöglicht.

### Bezugszeichenliste

- 1: Rohkarosserie
- 2: Tastelement
- 3: Tastspitze
- 4: Aufnahmekörper
- 5: Rücksprung
- 6: Betätigungsfortsatz
- 7: Tür
- 8: Karosserieseitenwand
- 9: Schlitz
- 10: Klemmschraube
- 11: Heckklappe
- 12: rahmenartiges Gestell
- 13: Aussparung im rahmenartigen Gestell
- 14: Haftmagnete
- 15: Nut
- 16, 17, 18: Magnet
- 19: Scheibe
- 20: Anschlagflächen

## Patentansprüche

1. Verfahren zur Überprüfung von Spaltmaßen zwischen der Rohkarosserie eines Fahrzeugs (1) und Türen (7) oder Klappen (11), die an der Karosserie angeschlagen sind, insbesondere im Bereich von einzubringenden umlaufenden Profildichtungen mittels elektronisch auswertbaren Tastelementen (2),
**dadurch gekennzeichnet, daß**
in den offenen und zugänglichen Wandbereich der Rohkarosserie (1) ein rahmenartiges Gestell (12) eingesetzt wird, wobei das Gestell an vorgegebenen Meßpunkten Aussparungen (13) aufweist,
in die Meßpunkt-Aussparungen (13) die elektronisch auswertbaren Tastelemente (2) eingesetzt werden oder dort befestigt sind,
die jeweilige Tür (7) oder Klappe (11) in ihre Schließposition überführt, in dieser Position gehalten wird und in Schließposition die Spaltmeßwerterfassung erfolgt.

2. Verfahren nach Anspruch 1,
**dadurch gekennzeichnet, daß**
die Tastelemente (2) magnetisch an der Rohkarosserie (1) befestigt werden.

3. Verfahren nach Anspruch 1,
**dadurch gekennzeichnet, daß**
die Tastelemente (2) kraftschlüssig an der Rohkarosserie (1) fixiert werden oder am Gestell (12) befestigt sind.

4. Verfahren nach einem der vorangegangenen Ansprüche,
**dadurch gekennzeichnet, daß**
die Schließposition für die Spaltmessung magnetisch gehalten wird.

5. Verfahren nach einem der vorangegangenen Ansprüche,
**dadurch gekennzeichnet, daß**
der oder die rahmenartigen Gestelle (12) während der Messung am eingesetzten Ort verbleiben.

6. Verfahren nach einem der vorangegangenen Ansprüche,
**dadurch gekennzeichnet, daß**
zur Verwendung von Standard-Tastelementen (2) sowie zur Sicherstellung der zu überstreichenden Meßbereiche an die jeweiligen Kfz-typischen geometrischen Verhältnisse angepaßte Tastelement-Aufnahmekörper (4) eingesetzt werden, welche ein Betätigungs- oder Hebelelement (5) (6) zum leichteren Setzen oder Entfernen umfassen.

7. Vorrichtung zur Überprüfung von Spaltmaßen zwischen der Rohkarosserie (1) eines Fahrzeugs und Türen (7) oder Klappen (11), die an der Karosserie angeschlagen sind, insbesondere im Bereich von einzubringenden umlaufenden Profildichtungen mittels elektronisch auswertbaren Tastelementen (2),
**dadurch gekennzeichnet, daß**
diese ein rahmenartiges Gestell (12) zur Verwendung als Setzschablone für die Tastelemente (2) aufweist, wobei das Gestell an vorbestimmten Meßpunkten Aussparungen für die Tastelemente (13) umfaßt,
die Tastelemente (2) von einem zugehörigen Aufnahmekörper (4) getragen sind, wobei der jeweilige Aufnahmekörper (4) eine nutförmige Öffnung (15) für das Tastelement (2) sowie einen Handhabungs- und Betätigungsfortsatz (5) (6) aufweist.

8. Vorrichtung nach Anspruch 7,
**dadurch gekennzeichnet, daß**
das rahmenartige Gestell (12) aus einem kohlefaserverstärkten Material besteht.

9. Vorrichtung nach Anspruch 7 oder 8,
**dadurch gekennzeichnet, daß**
im Aufnahmekörper (4) mindestens ein Magnetelement (17) eingesetzt ist,

10. Vorrichtung nach Anspruch 7, 8 oder 9,
**dadurch gekennzeichnet, daß**
der Aufnahmekörper (4) einen Klemmschlitz (9) mit Klemmschraube (10) aufweist.

11. Vorrichtung nach einem der Ansprüche 7 bis 10,
**dadurch gekennzeichnet, daß**
der Aufnahmekörper (4) als Winkeladapter ausgeführt ist.

12. Vorrichtung nach einem der Ansprüche 7 bis 11,
**dadurch gekennzeichnet, daß**
die Öffnung im Aufnahmekörper (4) eine Kreisform aufweist und in diese eine magnetisch fixierte Drehscheibe (19) eingesetzt ist, welche wiederum eine Nut (15) für das Tastelement (2) umfaßt.

13. Vorrichtung nach Anspruch 12,
**dadurch gekennzeichnet, daß**
zur Höhenanpassung die Drehscheibe (19) auswechselbar ist und jeweils eine unterschiedliche Dicke besitzt.

14. Vorrichtung nach Anspruch 12 oder 13,
**dadurch gekennzeichnet, daß**
die kreisförmige Öffnung den Schwenkbereich der Drehscheibe (19) mit eingesetztem Tastelement (2) begrenzende Anschlagsflächen oder Anschlagskanten (20) aufweist.

## Claims

1. A method for checking the gap widths between the body framework of a vehicle (1) and doors (7) or closures (11) attached to the body, especially in the region of surrounding profile seals to be inserted, by means of electronically evaluated sensing elements (2),
**characterized in that**
a frame-like rack (12) is inserted into the open and accessible wall area of the body framework (1), said rack having recesses (13) at predetermined measuring points, the electronically evaluated sensing elements (2) are inserted into or fixed in the measuring point recesses (13),
the respective door (7) or closure (11) is transferred into its closed position, is held in this position and the detection of the gap width value is carried out in the closed position.

2. The method according to claim 1,
**characterized in that**
the sensing elements (2) are fixed to the body framework (1) magnetically.

3. The method according to claim 1,
**characterized in that**
the sensing elements (2) are fixed to the body framework (1) in a force-fit manner or are attached to the rack (12).

4. The method according to one of the preceding claims,
**characterized in that**
the closed position for the gap measurement is held magnetically.

5. The method according to one of the preceding claims,
**characterized in that**
the frame-like rack(s) (12) remain(s) in the inserted place during the measurement.

6. The method according to one of the preceding claims,
**characterized in that**
for the use of standard sensing elements (2) as well as for ensuring the measurement ranges to be swept over, sensing element receiving bodies (4) adapted to the respective geometrical conditions typical for a motor vehicle are used, which comprise an actuating or lever element (5) (6) to allow an easier fitting or removal.

7. A device for checking the gap widths between the body framework of a vehicle (1) and doors (7) or closures (11) attached to the body, especially in the region of surrounding profile seals to be inserted, by means of electronically evaluated sensing elements (2),
**characterized in that**
it comprises a frame-like rack (12) to be used as a fitting template for the sensing elements (2), said rack comprising recesses for the sensing elements (13) at predetermined measuring points,
the sensing elements (2) are carried by an associated receiving body (4), said respective receiving body (4) having a groove-shaped opening (15) for the sensing element (2) as well as a handling and actuating extension (5) (6).

8. The device according to claim 7,
**characterized in that**
the frame-like rack (12) is made of a carbon fiber reinforced material.

9. The device according to claim 7 or 8,
**characterized in that**
at least one magnetic element (17) is inserted into the receiving body (4).

10. The device according to claim 7, 8 or 9,
**characterized in that**
the receiving body (4) includes a clamping slot (9) with a clamping screw (10).

11. The device according to one of claims 7 to 10,
**characterized in that**
the receiving body (4) is embodied as an angular adaptor.

12. The device according to one of claims 7 to 11,
**characterized in that**
the opening in the receiving body (4) is circular and a magnetically fixed rotating disc (19) is inserted into the same, which also has a groove (15) for the sensing element (2).

13. The device according claim 12,
**characterized in that**
for adjusting the height the rotating disc (19) is exchangeable and of a different thickness.

14. The device according to claim 12 or 13,
**characterized in that**
the circular opening includes the range of rotation of the rotating disc (19), with stop faces or stop edges (20) limiting the inserted sensing element (2).

## Revendications

1. Procédé de vérification de dimensions d'intervalles entre la carrosserie brute d'un véhicule (1) et des portes (7) ou ouvrants (11) qui sont montés sur la carrosserie, en particulier dans la zone de joints profilés périphériques à poser, au moyen d'éléments de palpage (2) à évaluation électronique, **caractérisé en ce que**
dans la zone de paroi ouverte et accessible de la carrosserie brute (1) est inséré un châssis (12) en forme de cadre, le châssis présentant à des points de mesure prédéterminés des évidements (13),
les éléments de palpage (2) à évaluation électronique sont insérés et fixés dans les évidements (13) de points de mesure,
la porte (7) respective ou l'ouvrant (11) respectif est amené(e) dans sa position de fermeture, maintenu(e) dans cette position, et la détection de la valeur de mesure d'intervalle a lieu dans la position de fermeture.

2. Procédé selon la revendication 1,
**caractérisé en ce que**
les éléments de palpage (2) sont fixés magnétiquement sur la carrosserie (1) brute.

3. Procédé selon la revendication 1,
**caractérisé en ce que**
les éléments de palpage (2) sont fixés par coopération de force sur la carrosserie (1) brute ou immobilisés sur le châssis (12).

4. Procédé selon l'une quelconque des revendications précédentes,
**caractérisé en ce que**
la position pour la mesure d'intervalles est maintenue magnétiquement.

5. Procédé selon l'une quelconque des revendications précédentes,
**caractérisé en ce que**
pendant la mesure, le ou les châssis (12) en forme de cadre reste(nt) à l'endroit de mise en place.

6. Procédé selon l'une quelconque des revendications précédentes,
**caractérisé en ce que**
pour utiliser des éléments de palpage (2) standard ainsi que pour assurer les zones de mesure à balayer, on met en oeuvre des corps de réception (4) d'élément de palpage, adaptés aux conditions géométriques respectives typiques pour le véhicule automobile, lesquels comprennent un élément d'actionnement (5) ou de levier (6) pour une mise en place ou un enlèvement plus facile.

7. Dispositif de vérification de dimensions d'intervalles entre la carrosserie brute d'un véhicule (1) et des portes (7) ou ouvrants (11) qui sont montés sur la carrosserie, en particulier dans la zone de joints profilés périphériques à poser, au moyen d'éléments de palpage (2) à évaluation électronique,
**caractérisé en ce que**
ce dispositif présente un châssis (12) en forme de cadre pour être utilisé à titre de gabarit de positionnement pour les éléments de palpage (2), le châssis comprenant à des points de mesure prédéterminés des évidements pour les éléments de palpage (13),
les éléments de palpage (2) sont portés par un corps de réception (4) associé, le corps de réception (4) respectif présentant une ouverture (15) en forme de gorge pour l'élément de palpage (2) ainsi qu'un prolongement de manipulation (5) et d'actionnement (6).

8. Dispositif selon la revendication 7,
**caractérisé en ce que**
le châssis (12) en forme de cadre est constitué par un matériau renforcé par fibres de carbone.

9. Dispositif selon la revendication 7 ou 8,
**caractérisé en ce que**
dans le corps de réception (4) est introduit au moins un élément magnétique (17).

10. Dispositif selon la revendication 7, 8 ou 9,
**caractérisé en ce que**
le corps de réception (4) présente une fente de serrage (9) avec vis de serrage (10).

11. Dispositif selon l'une des revendications 7 à 10,
**caractérisé en ce que**
le corps de réception (4) est réalisé sous forme d'adaptateur angulaire.

12. Dispositif selon l'une des revendications 7 à 11,
**caractérisé en ce que**
l'ouverture dans le corps de réception (4) présente une forme circulaire et dans celle-ci est introduit un disque rotatif (19) fixé magnétiquement, qui comprend à son tour une gorge (15) pour l'élément de palpage (2).

13. Dispositif selon la revendication 12,
**caractérisé en ce que**
pour l'adaptation en hauteur, le disque rotatif (19) est interchangeable et possède une épaisseur respective différente.

14. Dispositif selon la revendication 12 ou 13,
**caractérisé en ce que**
l'ouverture de forme circulaire présente des surfaces de butée ou des arêtes de butée (20) limitant la zone de pivotement du disque rotatif (19) avec l'élément de palpage (2) introduit.
